# EUROPEAN PATENT SPECIFICATION

(11) **EP 3 601 868 B1**
(45) Date of publication and mention of the grant of the patent: **04.05.2022**
(21) Application number: 18718912.1
(22) Date of filing: 09.03.2018
(51) Int. Cl.: F16L 55/165, B05C 1/08, F16L 55/18, D06F 45/22, B25G 1/10, B05C 17/10, D06B 15/02, B05C 17/02, D06B 5/08, D06B 23/02

(54) **DEVICE FOR PREPARING LINER FOR PIPE**
VORRICHTUNG ZUR VORBEREITUNG DER AUSKLEIDUNG FÜR EIN ROHR
DISPOSITIF PERMETTANT DE PRÉPARER UN REVÊTEMENT DE TUYAU

(30) Priority: 22.03.2017 FI 20175269
(43) Date of publication of application: 05.02.2020
(73) Proprietor: Picote Solutions Oy Ltd, 06450 Porvoo (FI)
(72) Inventor: LOKKINEN, Mika, 10130 Tallinn (EE)
(74) Representative: Wilenius, Jami Juhani
(86) International application number: PCT/IB2018/051540
(87) International publication number: WO 2018/172876

(56) References cited:
- US-A- 2 823 402
- US-A- 3 593 360
- US-A- 4 476 806
- US-A- 4 742 597
- US-A- 5 133 117
- US-A1- 2012 144 964
- US-A1- 2015 065 322

## Description

### FIELD OF THE INVENTION

The invention relates to a device for spreading epoxy evenly into a liner used in pipe renovations.

### PRIOR ART

The pipes in real estate properties are, increasingly more often, renovated by the so-called CIPP (Cured-in-Place Pipe) method, in which inside the pipes is installed an epoxy-saturated liner, which is slid into the pipe by the inversion method using air pressure. Before installation, the outer surface of the liner is formed by an impenetrable plastic membrane and the inner surface by an absorbent material, usually felt or fabric. Into the liner is introduced epoxy in liquid form and the liner is mangled until the epoxy has spread and soaked evenly into the inside surface of the liner, after which the liner is reeled into a CIPP lining drum. In inversion, compressed air in the CIPP lining drum causes the inside of the liner in the CIPP lining drum to invert in the pipeline as the outer surface of the liner, wherein the epoxy in the outer surface adheres to the inner surface of the pipe. Once the liner is fully inverted from the CIPP lining drum into the pipe, air pressure is maintained until the epoxy has cured and the liner forms a new pipe inside the old pipe.

A disadvantage in the arrangement are the mangles according to prior art, which are heavy and require electricity to function, thus they are to be fixedly installed. Preparation of the liner must then be performed in a car or a worksite container, into which the mangle is installed. Documents US2823402, US2015065322A1, US5133117, US4742597 or US4476806 disclose various examples of devices comprising a frame with outer rings suitable to apply liquids to surfaces.

### BRIEF DESCRIPTION OF THE INVENTION

The object of the invention is a device for preparing a liner to be installed in a pipe according to the technical features of claim 1, which decreases the disadvantages of mangles according to prior art. Further advantages of a device according to the invention are defined in the subject matter of the dependent claims.

The invention is based on a cylinder, the distance of which from a planar surface can be formed as desired by the rings in the cylinder. A device according to the invention has a cylindrical frame, onto which are arranged, spaced apart from each other, rings larger in radius than the radius of the cylinder. The part of the cylinder remaining between the rings forms against the planar surface a gap that is the size of the difference between the radius of the rings and the radius of the cylinder. Using the device, the epoxy inside the liner can be spread into an even layer, for example, by placing the liner onto the planar surface and rolling the device on the liner such that the liner is between the rings of the device. Alternatively, the device can be rotated in place such that the rings are against a rotatable or freely rotating cylinder, wherein the liner, running between the portion of the frame between the rings of the device and the second cylinder, is evened out to the thickness defined by the gap of the rings.

### BRIEF DESCRIPTION OF THE FIGURES

The invention is now described in more detail in connection with preferred embodiments, with reference to the accompanying drawings, in which:
Fig. 1 shows a frame with two rings of a device not comprised in the invention, in which the rings are arranged onto the surface of the frame;
Fig. 2 shows the frame with two rings of a device according to the invention, in which the rings are arranged to the ends of the frame;
Fig. 3 shows a device which is equipped with a handle comprised in the device according to the invention;
Fig. 4 shows a device in connection with a second cylinder.

### DETAILED DESCRIPTION OF THE INVENTION

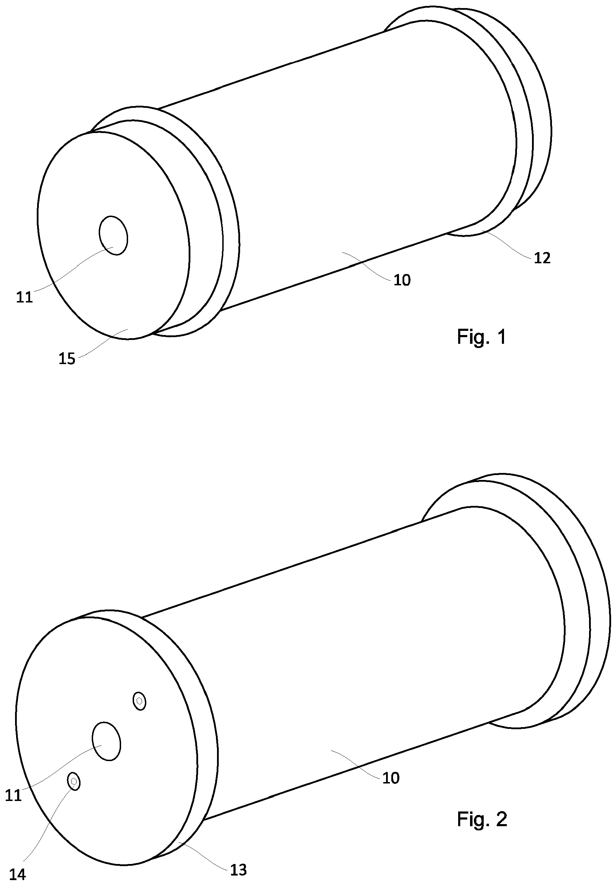

Fig. 1 shows a device , not part of the invention, which is composed of a rotationally symmetrical, cylindrical frame 10 and rings 12 on the surface of the frame 10. In the middle of both ends 15 of the frame 10 are round openings 11, from which the device can, for example, be bearing-mounted or into which can be fastened a handle for pushing the device or a crank for rotating the device. The openings 11 can also be in connection with each other, wherein it is a case of a hole extending through the entire frame 10. Into the frame 10 can be arranged grooves around the frame at the rings 12, wherein the groove contributes to the rings 12 remaining in place on the frame 10. The surface of the frame 10 is preferably even, with the exception of the possible grooves arranged for the rings.

The frame 10 is preferably manufactured from plastic, wood, metal or a combination of the above. The rings 12 can be a fixed part of the frame, or detachably attached to the frame 10. In one embodiment, there are grooves in the surface of the frame 10 for the rings 12, and the rings are manufactured from rubber, silicon or other elastic material in order that they can be slightly stretched when installing into place, and having settled into the grooves, the rings 12 return to their original form and remain in place in the grooves. The rings 12 preferably also have nonslip surfaces, for example of rubber or silicon, wherein the device can easily be rolled against a planar surface, rather than that the device would slide against the planar surface. Sliding of the device might damage a liner that is being handled, thus it is preferable that the coefficient of sliding friction of the rings is high, causing rolling of the device instead of sliding, for example, when the device is moved against a planar surface.

Fig. 2 shows the frame of the device according to the invention, composed of a rotationally symmetrical, cylindrical frame 10 and the device of the invention further comprising two disc-like rings 13 in the ends 15 of the frame 10. The rings 13 can be a fixed part of the frame 10, or they can be detachably attached to the frame 10, for example, with screws 14. Both in the middle of the rings 13 and in the middle of both ends 15 of the frame 10 are round openings 11, from which the device can, for example, be bearing-mounted or into which can be fastened a handle for pushing the device or a crank for rotating the device. In one embodiment, the frame 10 is a completely solid and uniformly thick cylinder and the openings 11 are only in the middle of the rings 13, which are fastened to the ends 15 of the frame 10. The openings 11 of the frame can also be in connection with each other, wherein it is a case of a hole extending through the entire frame 10. The surface of the frame 10 is preferably even, with the exception of the possible grooves arranged for the rings.

The frame 10 is preferably manufactured from plastic, wood, metal or a combination of the above. The rings 13 can be a fixed part of the frame, or detachably attached to the frame 10. The outer surface on the circumference of the rings 13 is preferably covered with, coated with or manufactured from, for example, rubber, silicon or other material having a nonslip surface, wherein the device can easily be rolled against a planar surface, rather than that the device would slide against the planar surface. Sliding of the device might damage a liner that is being handled, thus it is preferable that the coefficient of sliding friction of the rings is high, causing rolling of the device instead of sliding, for example, when the device is moved against a planar surface.

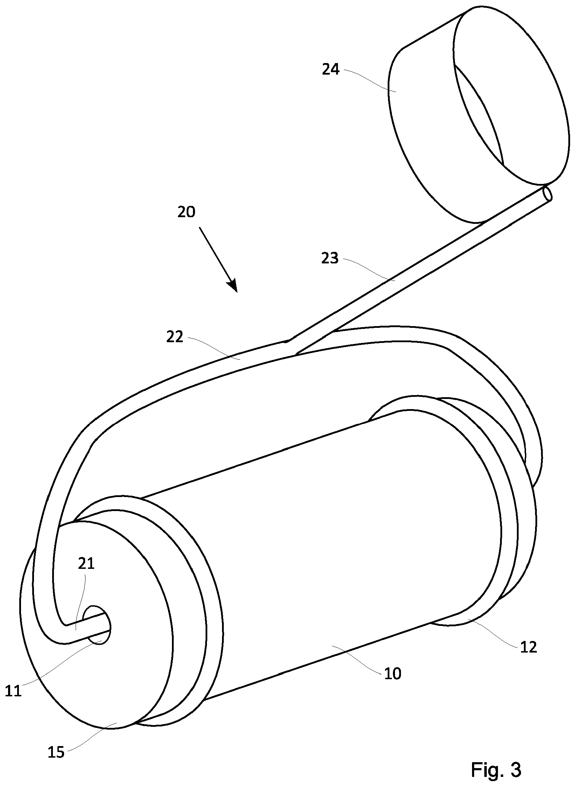

Fig. 3 shows a device according to the Fig. 1, which further has a handle 20 comprised in the device according to the invention for using the device with one hand. An equivalent handle can also be used in connection with a frame with the two rings according to Fig. 2 and which defines a device according to the invention. The handle 20 is preferably detachably attached to the frame. The handle 20 has two axis parts 21 parallel to the rotational axis of the frame 10, which are adapted to be inserted into the openings 11 in the ends 15 of the frame 10. Bearings can be used in the outermost ends of the axis parts 21 of the handle to decrease friction between the axis part 21 and the frame 10. The handle 20 further has a frame part 22 linking the axis parts 21, which is, in its entirety, outside the frame. The handle 20 further comprises a support part 23 connected to the frame part 22, which is preferably transverse in relation to the rotational axis of the frame 10. The handle 20 further comprises, in connection with the support part 23, an elbow support 24, which can be, for example, the shape of a ring or pipe. The handle 20 is preferably manufactured from metal, such as steel, in order to achieve adequate stiffness and resiliency. The handle 20 may be detached from the frame by pulling the outermost end of the handle 20 away from the frame 10 in the direction of the rotational axis of the frame 10, wherein the axis part 21 rises away from the opening 11 of the frame, and the handle 20 is released. Correspondingly, the handle 20 may be attached to the frame by pulling the axis parts 21 further from each other, placing the axis parts at the openings 11 of the frame, and releasing the grasp from the handle, wherein the axis parts 21 protrude into the openings 11 of the frame. Because the distance between the free ends of the axis parts 21, when the handle is in the resting position, is less than the length of the frame 10, the handle 20 does not detach from the frame 10 other than by pulling the axis parts 21 further from each other.

The axis parts 21 of the handle may be bolts and the openings 11 of the frame 10 may be threaded to receive the thread of the bolt of the axis part and bearing-mounted in relation to the frame. Other corresponding manners of connection allowing rotational movement can also be used between the frame and the handle.

The device shown in Fig. 3, which comprises a frame 10, rings 12 and a handle 20, can be used with one hand to spread epoxy inside a liner. The hand is inserted through the elbow support 24 such that the wrist and part of the forearm remain against the support part 23 and, by grasping with the palm, a hold is taken from the connection point of the support part 23 and the frame part 22. The elbow support 24 assists the leverage effect produced by the support part 23 in order to create an adequate force for pressing the device against the planar surface in order that the rings 12 remain against the planar surface and the liner to be levelled remains between the rings as well as between the frame 10 and the planar surface. As the planar surface can be used almost any level surface, such as a floor, table, worktop, or even a wall. The hand remaining free can, for example, move, correct or hold in place the liner, while, using the device, the epoxy inside the liner is rolled into an even layer.

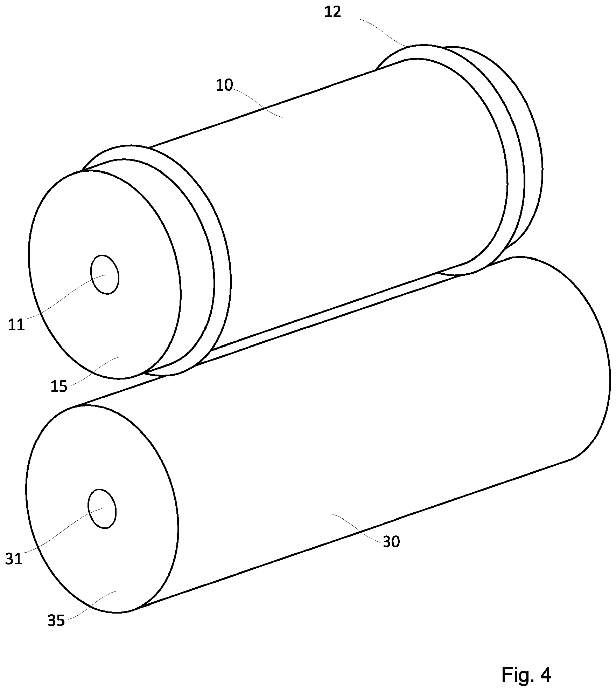

Fig. 4 shows the device according to Fig. 1 in connection with a counter-cylinder 30. A corresponding arrangement can also be used in connection with the frame with two rings of a device according to the embodiment shown in Fig. 2. Both the cylindrical frame 10 of the device and the counter-cylinder 30 may be rotatably fastened to a support structure, for example, by axes from the openings 11 of the ends 15 of the frame 10, and from the openings 31 of the ends 35 of the counter-cylinder 30 such that their rotational axes are parallel and at the desired distance from each other. Neither the fastening to the support structure nor the support structure is shown in Fig. 4. The distance between the rotational axes is preferably exactly as great or nearly as great as the sum of the radius of the ring 12 in connection with the frame 10 and the radius of the counter-cylinder 30. The distance can deviate from said sum of the radii, for example, by less than 5%, less than 10% or less than 15%. In one embodiment, both the frame 10 and the counter-cylinder 30 are fastened to rotate freely around their rotational axes. In one preferred embodiment, to the frame 10 and/or counter-cylinder 30 are connected rotational means for rotating it/them. In one embodiment, the rotational means can be a crank, by which the frame and/or counter-cylinder can be manually rotated. In one embodiment, the rotational means can be an angular peg, by which the frame and/or counter-cylinder can be rotated by a power drill or an electric screwdriver by connecting the angular peg into the chuck of the drill or the screwdriver, or manually using, for example, an adjustable wrench, box wrench, open-ended wrench or ring wrench as an aid for grasping the angular peg.

## Claims

1. A device for preparing a liner to be installed in a pipe, the device comprising a frame (10), which is rotationally symmetrical in relation to its rotational axis, the frame having two ends (15), in the middle of both of which ends (15) is arranged an opening (11), and the device further comprising two rings (13) in connection with the frame (10), which are equally large in their outer diameter and said outer diameter is larger than the outer diameter of the frame (10) in the section between the rings (13), wherein each ring (13) of said two rings is fastened to a corresponding end (15) of the frame, the rings (13) being in their outer diameter 5-30 mm larger the outer diameter of the frame (10) in the section between the rings (13), and the device further comprising a handle (20) for using the device with one hand,
wherein said handle (20) comprises two axis parts (21) parallel to the rotational axis of the frame (10), which are adapted to be inserted into the
openings (11) in the ends (15) of the frame (10);
a frame part (22) linking the axis parts (21); a support part (23) connected to the frame part (22), which is transverse in relation to the rotational axis of the frame (10); and
an elbow support (24) in connection with the support part (23), wherein said elbow support (24) of the handle (20) is in its shape a ring or pipe, having an outer diameter and an inner diameter, wherein the inner diameter of the elbow support (24) is, at its narrowest point, at least 50 mm.

2. A device according to claim 1, **characterized in that** said rings (13) comprise rubber or silicon on the outer surface of the rings (13) to prevent slippage.

3. A device according to any one of claims 1-2, **characterized in that** said rings (13) are detachably attached to the frame (10) and arranged as interchangeable with rings of different size in their outer diameter in order to achieve the desired clearance.

4. A device according to claim 1, **characterized in that** at least the axis parts (21) of the handle (20) and the frame part (22) are manufactured at least partially from steel.

## Patentansprüche

1. Vorrichtung zum Vorbereiten einer in einem Rohr zu installierenden Auskleidung, wobei die Vorrichtung ein Gestell (10) umfasst, das im Verhältnis zu seiner Drehachse rotationssymmetrisch ist, wobei das Gestell zwei Enden (15) aufweist, wobei in der Mitte der beiden Enden (15) eine Öffnung (11) angeordnet ist, und die Vorrichtung ferner zwei Ringe (13) in Verbindung mit dem Gestell (10) umfasst, die in ihrem Außendurchmesser gleich groß sind, und wobei der Außendurchmesser in dem Abschnitt zwischen den Ringen (13) größer als der Außendurchmesser des Gestells (10) ist, wobei jeder Ring (13) der beiden Ringe an einem entsprechenden Ende (15) des Gestells befestigt ist, wobei die Ringe (13) in ihrem Außendurchmesser 5 bis 30 mm größer als der Außendurchmesser des Gestells (10) in dem Abschnitt zwischen den Ringen (13) ist, und die Vorrichtung ferner einen Griff (20) zur Verwendung der Vorrichtung mit einer Hand umfasst, wobei der Griff (20) zwei Achsenteile (21) parallel zur Drehachse des Gestells (10) umfasst, die geeignet sind, um in die Öffnungen (11) in den Enden (15) des Gestells (10) eingesetzt zu werden;
ein Gestellteil (22), das die Achsenteile (21) aneinanderfügt;
ein Trägerteil (23) in Verbindung mit dem Gestellteil (22), das im Verhältnis zur Drehachse des Gestells (10) quer liegt; und
eine Ellenbogenstütze (24) in Verbindung mit dem Trägerteil (23), wobei die Ellenbogenstütze (24) des Griffs (20) formmäßig ein Ring oder ein Rohr ist, der bzw. das einen Außenmesser und einen Innendurchmesser aufweist, wobei der Innendurchmesser der Ellenbogenstütze (24) an seiner schmalsten Stelle mindestens 50 mm misst.

2. Vorrichtung nach Anspruch 1, **dadurch gekennzeichnet, dass** die Ringe (13) Gummi oder Silikon auf der Außenfläche der Ringe (13) umfassen, um ein Verrutschen zu verhindern.

3. Vorrichtung nach einem der Ansprüche 1 bis 2, **dadurch gekennzeichnet, dass** die Ringe (13) abnehmbar an dem Gestell (10) angebracht sind und als mit Ringen unterschiedlicher Größe in ihrem Außendurchmesser austauschbar angeordnet sind, um den gewünschten Spielraum zu erreichen.

4. Vorrichtung nach Anspruch 1, **dadurch gekennzeichnet, dass** die Achsenteile (21) des Griffs (20) und das Gestellteil (22) mindestens teilweise aus Stahl hergestellt sind.

## Revendications

1. Dispositif pour préparer un revêtement à installer dans un tuyau, le dispositif comprenant un châssis (10), qui est symétrique en rotation par rapport à son axe de rotation, le châssis ayant deux extrémités (15), au milieu desquelles deux extrémités (15) est ménagée une ouverture (11), et le dispositif comprenant en outre deux anneaux (13) en liaison avec le châssis (10), lesquels ont un diamètre extérieur de même taille et ledit diamètre extérieur est plus grand que le diamètre extérieur du châssis (10) dans la section entre les anneaux (13), chaque anneau (13) desdits deux anneaux étant fixé à une extrémité (15) correspondante du châssis, les anneaux (13) étant dans leur diamètre extérieur 5 à 30 mm plus grand que le diamètre extérieur du châssis (10) dans la section entre les anneaux (13), et le dispositif comprenant en outre une poignée (20) pour utiliser le dispositif avec une main, ladite poignée (20) comprenant deux parties d'axe (21) parallèles à l'axe de rotation du châssis (10), lesquelles sont aptes à être introduites dans les ouvertures (11) dans les extrémités (15) du châssis (10) ;
une partie de châssis (22) reliant les parties d'axe (21) ;
une partie de support (23) reliée à la partie de châssis (22), laquelle est transversale par rapport à l'axe de rotation du châssis (10) ; et
un support de coude (24) en liaison avec la partie de support (23), ledit support de coude (24) de la poignée (20) étant en forme d'anneau ou de tuyau, ayant un diamètre extérieur et un diamètre intérieur, le diamètre intérieur du support de coude (24) étant, à son point le plus étroit, d'au moins 50 mm.

2. Dispositif selon la revendication 1, **caractérisé par le fait que** lesdits anneaux (13) comprennent du caoutchouc ou du silicone sur la surface extérieure des anneaux (13) pour empêcher un glissement.

3. Dispositif selon l'une quelconque des revendications 1 et 2, **caractérisé par le fait que** lesdits anneaux (13) sont fixés de manière détachable au châssis (10) et disposés de manière interchangeable avec des anneaux de taille différente dans leur diamètre extérieur afin d'obtenir le dégagement souhaité.

4. Dispositif selon la revendication 1, **caractérisé par le fait qu'**au moins les parties d'axe (21) de la poignée (20) et la partie de châssis (22) sont fabriquées au moins partiellement à partir d'acier.
